# FASCICULE DE BREVET EUROPEEN

(11) **EP 2 396 841 B1**
(45) Date de publication et mention de la délivrance du brevet: **24.08.2016**
(21) Numéro de dépôt: 10706967.6
(22) Date de dépôt: 09.02.2010
(51) Int. Cl.: H01M 10/052, H01M 4/13, H01M 4/139, H01M 2/02, H01M 4/131, H01M 4/133, H01M 4/134, H01M 4/136, H01M 4/1391, H01M 4/1393, H01M 4/1395, H01M 4/1397, H01M 4/485, H01M 4/505, H01M 4/525, H01M 4/58, H01M 4/64, H01M 10/0525, B01F 11/02, B01F 3/12, H01M 4/62

(54) **PROCÉDÉ DE PRÉPARATION D'UN MÉLANGE D'UNE POUDRE D'UN COMPOSÉ ACTIF D'ÉLECTRODE ET D'UNE POUDRE D'UN COMPOSÉ CONDUCTEUR ÉLECTRONIQUE, MÉLANGE AINSI OBTENU, ÉLECTRODE, CELLULE ET ACCUMULATEUR**
VERFAHREN ZUR HERSTELLUNG EINER MISCHUNG AUS EINER ELEKTRODENAKTIVEN PULVERVERBINDUNG UND ELEKTRISCH LEITENDE PULVERVERBINDUNG, DARAUS RESULTIERENDE MISCHUNG SOWIE ELEKTRODE, ZELLE UND BATTERIE DAFÜR
METHOD FOR PREPARING A MIXTURE OF AN ELECTRODE ACTIVE COMPOUND POWDER AND AN ELECTRONIC CONDUCTOR COMPOUND POWDER, RESULTING MIXTURE, ELECTRODE, CELL AND BATTERY

(30) Priorité: 11.02.2009 FR 0950858
(43) Date de publication de la demande: 21.12.2011
(73) Titulaire: Commissariat à l'Énergie Atomique et aux Énergies Alternatives, 75015 Paris (FR)
(72) Inventeur: PATOUX, Sébastien, F-38600 Fontaine (FR); BOURBON, Carole, F-38590 Saint-Michel De Saint-Geoirs (FR); DANIEL, Lise, 38160 Saint Marcellin (FR)
(74) Mandataire: Ilgart, Jean-Christophe
(86) Numéro de dépôt international: PCT/EP2010/051571
(87) Numéro de publication internationale: WO 2010/092044

(56) Documents cités:
- EP-A1- 1 547 973
- EP-A1- 2 034 541
- WO-A1-2009/004182
- US-A1- 2008 171 265
- US-A1- 2009 023 065

## Description

### DOMAINE TECHNIQUE

L'invention concerne un procédé de préparation d'un mélange d'une poudre d'un composé actif d'électrode et d'une poudre d'un composé conducteur électronique.

L'invention concerne en outre le mélange susceptible d'être obtenu par ce procédé.

L'invention a également trait à une électrode, positive ou négative, comprenant ce mélange en tant que matière électrochimiquement active.

Enfin l'invention concerne une cellule d'un accumulateur rechargeable à électrolyte organique, non aqueux, notamment d'une batterie au lithium et plus précisément d'une batterie Li-ion comprenant ladite électrode, ainsi que l'accumulateur ou batterie comprenant une ou plusieurs de ces cellules.

Le domaine technique de l'invention peut être défini de manière générale comme celui des électrodes mises en oeuvre dans les systèmes électrochimiques à électrolyte non aqueux, organique et plus particulièrement comme celui des accumulateurs rechargeables à électrolyte organique tels que les accumulateurs, batteries au lithium et plus particulièrement les accumulateurs, batteries Li-ion comportant au moins deux électrodes à base de matériaux actifs différents et un électrolyte dans lequel les cations Li⁺ ont la possibilité de migrer d'une électrode à l'autre en fonction de l'utilisation en charge ou en décharge.

### ÉTAT DE LA TECHNIQUE ANTÉRIEURE

Afin de répondre aux besoins croissants dans le domaine de l'alimentation autonome en énergie dans des domaines aussi variés que l'informatique, les appareils vidéo, la téléphonie, le « spatial », le « médical », la microélectronique, les applications stationnaires, les véhicules hybrides..., plusieurs systèmes de stockage de l'énergie sont aujourd'hui employés, dont les accumulateurs Li-ion, Ni-MH, Ni-Cd, et acide-plomb.

Ces accumulateurs présentent des performances différentes en termes de densité d'énergie et de densité de puissance.

Alors que la densité d'énergie correspond à l'autonomie du système de stockage, la densité de puissance indique l'aptitude du système à libérer une quantité plus ou moins importante d'énergie dans un court intervalle de temps. Ce critère est particulièrement important pour les nouvelles applications telles que l'automobile hybride et l'électronique de puissance.

Les accumulateurs Li-ion sont donc aujourd'hui de plus en plus utilisés comme sources d'énergie autonomes, en particulier, dans les équipements portables, où ils remplacent progressivement les accumulateurs nickel-cadmium (Ni-Cd) et nickel-hydrure métallique (Ni-MH).

Depuis quelques années, les ventes d'accumulateurs Li-ion dépassent largement celles des accumulateurs Ni-MH et Ni-Cd et concernent principalement les domaines de la téléphonie et des ordinateurs portables pour lesquels l'autonomie est un critère primordial.

Cette évolution s'explique par l'amélioration continue des performances des accumulateurs Li-ion en termes de densité d'énergie, conférant ainsi à ces accumulateurs des densités d'énergie massiques et volumiques nettement supérieures à celles proposées par les filières Ni-Cd et Ni-MH. Ainsi, la densité d'énergie massique est-elle de plus de 180 Wh/kg pour les accumulateurs Li-ion, contre 50 et 100 Wh/kg respectivement pour les accumulateurs Ni-Cd et Ni-MH ; tandis que les accumulateurs acide-plomb équipant les automobiles, par exemple, possèdent une densité d'énergie de seulement 30 à 35 Wh/kg.

A l'instar des applications nomades gourmandes en énergie et nécessitant une grande autonomie, l'électronique de puissance constitue désormais un domaine d'application en devenir pour des accumulateurs Li-ion capables d'effectuer des charges/décharges rapides.

Pour cela, les performances en puissance des accumulateurs Li-ion peuvent être fortement améliorées grâce à l'emploi de matériaux innovants d'électrodes adaptées aux applications puissance.

En particulier, l'oxyde de titane Li₄Ti₅O₁₂ constitue une alternative à l'électrode négative de graphite pour ce type d'application. En raison d'un potentiel plus élevé que celui du carbone (1,55V vs. Li⁺/Li contre 0,1 V vs. Li⁺/Li pour le graphite), cet oxyde de structure spinelle autorise une recharge rapide de l'accumulateur sans risque de formation de dendrites de lithium et donc de courts-circuits et d'explosion. D'autres oxydes de titane sont également étudiés. Il s'agit par exemple du dioxyde de titane TiO₂ dont les formes anatase et bronze, par exemple, sont favorables à l'insertion/extraction du lithium.

Des innovations sont également en cours concernant l'électrode positive. Différents composés peuvent être utilisés selon la tension et la capacité désirées. Le phosphate de fer lithié LiFePO₄, de structure olivine (170 mAh/g à 3,4 V vs. Li⁺/Li), est depuis quelques années considéré comme un matériau d'électrode positive de choix pour certaines applications nouvelles telles que l'automobile hybride ou l'outillage portatif. A un stade moins avancé, les oxydes spinelles de haute tension et de grande énergie de type LiNi_{0,5}Mn_{1,5}O₄ sont également à l'étude dans l'optique d'un remplacement futur des oxydes lamellaires commerciaux. Ces derniers sont encore largement utilisés dans les accumulateurs Li-ion commerciaux.

Dans tous les cas, des améliorations des performances en puissance sont escomptées afin de répondre aux nouveaux besoins.

A la différence des performances des accumulateurs en termes de densité d'énergie, qui dépendent principalement du choix du couple électrochimique employé, car la nature des matériaux d'électrodes positive et négative impose la tension et la capacité de la cellule, les performances en termes de puissance des accumulateurs Li-ion sont fortement liées au mode de préparation des matériaux d'électrodes qui influence leur aspect, leur taille et leur morphologie.

Des améliorations sont encore nécessaires à cet égard pour implanter durablement les accumulateurs Li-ion dans les applications de forte puissance.

En d'autres termes, l'émergence de nouvelles générations d'accumulateurs Li-ion passe par l'utilisation de matériaux d'électrodes plus performants.

En particulier, il est nécessaire d'améliorer la capacité spécifique des matériaux d'électrodes à des régimes élevés.

La solution la plus utilisée actuellement pour répondre à ce besoin consiste à ajouter au composé actif d'électrode du carbone ou un autre agent chimique permettant d'améliorer la conductivité électronique.

Ainsi il a été démontré dans les documents WO-A1-02/27823 [1] et WO-A2-2005/076390 [2], que le composé conducteur électronique, tel que le carbone pouvait être incorporé directement dans le composé actif d'électrode au cours de la synthèse de celui-ci, ce qui permet ainsi de disposer d'un mélange de matériau actif d'électrode et de composé conducteur électronique tel que le carbone homogène et de bonne qualité électrochimique.

Dans ces documents, le carbone est formé par décomposition thermique sous atmosphère contrôlée, inerte ou réductrice, d'une source organique telle que le sucrose, la cellulose, ou l'acide citrique.

Cette source organique est préalablement ajoutée aux précurseurs de synthèse du matériau actif d'électrode.

La formation du composé, matériau actif d'électrode et la décomposition de la source organique de carbone ont généralement lieu au cours de la même étape de traitement thermique. Ce traitement thermique est généralement réalisé à une température comprise entre 600 et 800°C.

Il y a lieu de noter que pour certains matériaux actifs d'électrode sensibles à l'effet de la chaleur, une telle température est trop élevée. Par exemple, le TiO₂-B (forme bronze), qui est l'une des variétés structurales de TiO₂, se transforme progressivement en TiO₂ de forme anatase à partir de 500°C et en TiO₂ de forme rutile au-dessus de 800°C, tandis que TiO₂-B est quant à lui, généralement obtenu entre 300 et 400°C.

Il n'est donc pas possible avec de tels matériaux actifs d'électrodes, thermiquement sensibles, d'utiliser le procédé d'incorporation de carbone décrit dans les documents [1] et [2] précités.

De nombreux autres matériaux, dont la préparation a lieu à basse température par un procédé de chimie douce, dans des conditions hydrothermales, présentent le même type de limitation thermique. En outre, la présence de carbone, associée à une température de synthèse élevée, notamment supérieure à 500°C, entraîne la présence d'une atmosphère réductrice au voisinage du matériau actif d'électrode.

Le type de réaction mis en jeu pour préparer des matériaux par les procédés des documents [1] et [2] est donc également incompatible avec la synthèse de matériaux sensibles à la réduction.

En outre, une température élevée a souvent pour conséquence l'augmentation de la taille des particules, causée par un phénomène d'agglomération, défavorable à l'obtention de matériaux dédiés aux applications de forte puissance.

Outre les procédés décrits dans les documents [1] et [2] dans lesquels on réalise la décomposition thermique d'une source organique *in situ* simultanément à la synthèse du matériau actif, un procédé dans lequel on utilise du carbone lors de la synthèse pour réduire le degré d'oxydation des éléments de transition est décrit dans le document de J. Barker, M.Y. Saidi, J.L. Swoyer, *J. Electrochem. Soc.,* 150 (6) (2003) A684-A688 [3]. Plus précisément, ce document décrit un procédé de réduction carbothermale (« CTR ») dans lequel du carbone de surface spécifique élevée est mélangé intimement avec les composés précurseurs des composés γ-LiV₂O₅ et Li₃V₂(PO₄)₃ et le mélange est chauffé dans une atmosphère inerte. Le procédé de ce document présente sensiblement les mêmes inconvénients que les procédés décrits dans les documents [1] et [2].

Il existe donc, au regard de ce qui précède, un besoin pour un procédé de préparation d'une matière électrochimiquement active d'électrode, et notamment d'une matière électrochimiquement active d'électrode comprenant un mélange d'un composé actif d'électrode et d'un composé conducteur électronique qui puisse être mis en oeuvre avec toutes sortes de composés actifs d'électrodes et de composés conducteurs électroniques et en particulier même avec des composés actifs d'électrodes thermiquement sensibles et/ou sensibles à la réduction par exemple par le carbone.

Il existe en outre un besoin pour un tel procédé qui n'occasionne aucune modification structurale du composé actif, ni aucune dégradation de celui-ci.

Il existe encore un besoin pour un tel procédé de préparation qui permette de préparer une matière électrochimiquement active d'électrode qui présente des performances électrochimiques améliorées, en particulier pour des régimes élevés et de fortes puissances, notamment par rapport aux matières électrochimiquement actives analogues actuellement utilisées telles que celles préparées dans les documents [1], [2] et [3].

Il existe enfin un besoin pour un tel procédé qui soit, simple, fiable, facile à mettre en oeuvre, et qui comporte un nombre limité d'étapes.

Le but de la présente invention est de fournir un procédé de préparation d'un mélange d'un composé actif d'électrode et d'un composé électroniquement conducteur qui réponde à l'ensemble des besoins énumérés plus haut.

EP1547973 décrit un procédé de préparation d'un mélange d'une poudre d'un composé actif d'électrode et d'une poudre d'un composé conducteur électronique dans lequel le mélange est soumis à l'action d'ultrasons.

Le but de la présente invention est encore de fournir un tel procédé qui ne présente pas les inconvénients, limitations, défauts et désavantages des procédés de l'art antérieur et qui résolve les problèmes des procédés de l'art antérieur.

### EXPOSÉ DE L'INVENTION

Ce but, et d'autres encore sont atteints, conformément à l'invention par un procédé de préparation d'un mélange d'une poudre d'un composé actif d'électrode et d'une poudre d'un composé conducteur électronique, dans lequel on réalise les étapes successives suivantes :
- on prépare un milieu liquide contenant la poudre du composé actif d'électrode et la poudre du composé conducteur électronique ;
- on soumet le milieu liquide contenant la poudre du composé actif d'électrode et la poudre du composé conducteur électronique à l'action d'ultrasons de haute énergie en plaçant la sonde d'un sonificateur haute intensité, haute énergie, dans le milieu liquide, la densité d'énergie produite par les ultrasons étant de 50 à 1000 W/L, de préférence de 150 à 700 W/L, et de préférence encore de 300 à 500 W/L du milieu liquide ;
- on élimine le milieu liquide ;
- on recueille le mélange de la poudre d'un composé actif d'électrode et de la poudre d'un composé conducteur électronique.

Avantageusement, l'action des ultrasons est régulée, réglée de telle sorte qu'elle permette de maintenir une température du milieu liquide inférieure à la température d'ébullition dudit milieu liquide, et de préférence stable.

Avantageusement, le milieu liquide peut être soumis à l'action des ultrasons de manière intermittente.

On peut ainsi soumettre le liquide à l'action des ultrasons pendant des périodes généralement de 1 à 10 secondes en observant des pauses d'une durée généralement de 1 à 10 secondes entre deux périodes.

Avantageusement, le milieu liquide peut être soumis à l'action des ultrasons pendant une durée totale de 1 minute à 40 heures, de préférence de 30 minutes à 30 heures, y compris les pauses.

Avantageusement, le milieu liquide peut être choisi parmi l'eau ; les solutions aqueuses ; les solvants organiques, par exemple l'éthanol, la NMP (N-méthyl-pyrolidone), l'hexane, l'acétone ; et les mélanges de ceux-ci.

Avantageusement, le mélange de la poudre du composé actif d'électrode et de la poudre du composé conducteur électronique est insoluble dans le milieu liquide.

Avantageusement, le composé actif d'électrode est choisi parmi les composés actifs d'électrode positive et les composés actifs d'électrode négative des batteries Li-ion, et les composés actifs d'électrode positive des batteries Lithium métal.

Avantageusement, le composé actif d'électrode est choisi parmi les oxydes de titane tels que TiO₂ sous forme bronze ou anatase, Li₄Ti₅O₁₂ ; les composés à charpente polyanionique tels que LiFePO₄, LiMnPO₄, et Li₃V₂(PO₄)₃ ; les oxydes lamellaires tels que LiCoO₂, et LiNi_{0,8}Co_{0,15}Al_{0,05}O₂ ; les oxydes spinelles tels que LiMn₂O₄, et LiNi_{0,5}Mn_{1,5}O₄ ; le silicium ; le soufre ; le carbone ; le carbone graphite ; et leurs mélanges.

Avantageusement, le composé conducteur électronique est choisi parmi les particules métalliques telles que les particules d'Ag, de Cu, de Ni ; le carbone, par exemple sous la forme de graphite, de noir de carbone, de fibres de carbone, de nanofils de carbone, de nanotubes de carbone, de nanosphères de carbone ; les polymères conducteurs électroniques ; et leurs mélanges.

Lorsque le composé conducteur électronique est un carbone ou un mélange de carbones, il(s) peut(peuvent) être avantageusement choisi(s) parmi les carbones amorphes ou cristallisés, sous la forme de fibres, nanotubes, nanofils ou nanosphères.

Avantageusement, le composé conducteur électronique tel que le carbone représente de 2 à 60% en masse du mélange.

Le procédé selon l'invention présente une suite d'étapes spécifiques qui n'a jamais été décrite dans l'art antérieur.

En particulier, le procédé selon l'invention se distingue fondamentalement des procédés de l'art antérieur, en ce qu'il met en oeuvre l'action d'ultrasons à haute énergie sur un milieu liquide tel que de l'eau contenant les poudres des deux composés déjà synthétisés au préalable.

Le procédé selon l'invention utilise en tant que matériau de départ des poudres de chacun des composés, préalablement synthétisés et non comme dans les procédés de l'art antérieur, tels que ceux des documents WO-A-02/27823 et WO-A-2005/076390, des précurseurs de ces composés qui sont traités à haute température pour former lesdits composés.

Le procédé selon l'invention n'utilise pas de températures élevées pour synthétiser les composés et peut donc être mis en oeuvre avec une grande variété de composés même thermiquement sensibles ce qui n'était pas possible avec les procédés de l'art antérieur.

Le procédé selon l'invention permet de manière surprenante d'obtenir un mélange intime des particules des deux composés sans entraîner de modification structurale, notamment du composé actif d'électrode. Aucune dégradation du composé actif d'électrode et aucun changement de morphologie de ce composé actif d'électrode ne sont observés. De même aucun changement de morphologie du composé conducteur électronique, ni aucune dégradation de ce composé ne sont observés.

Il est à noter que bien que des températures élevées puissent éventuellement se produire lors de l'action des ultrasons sur le milieu liquide, ces températures sont très localisées et ne peuvent occasionner de dégradation des composés, même thermiquement sensibles.

La température globale du milieu liquide demeure quant à elle modérée, inférieure à sa température d'ébullition et dans tous les cas nettement plus faible que la température nécessaire pour décomposer les précurseurs ou synthétiser les composés actifs à partir de ceux-ci. De même, dans le procédé selon l'invention et bien que des conditions réductrices puissent éventuellement régner, notamment dans le cas où le composé conducteur électronique est le carbone, elles n'entraînent pas de dégradation des composés même si ceux-ci sont sensibles à la réduction.

Les composés mis en oeuvre dans le procédé selon l'invention ne sont pas synthétisés « *in situ ».* Ce sont des composés déjà synthétisés au préalable, qui sont beaucoup moins sensibles à une température élevée et/ou à une atmosphère réductrice que des précurseurs exposés à de telles conditions.

Les performances électrochimiques, en particulier aux régimes élevés et pour une forte puissance des cellules et accumulateurs mettant en oeuvre le mélange préparé par le procédé selon l'invention sont améliorées quel que soit le composé actif d'électrode et quelle que soit la gamme de potentiels de fonctionnement associée. Ceci est illustré et démontré dans les exemples donnés plus bas.

L'invention concerne, en outre, le mélange d'une poudre d'un composé actif d'électrode et d'une poudre d'un composé conducteur électronique susceptible d'être préparé par le procédé tel que décrit ci-dessus.

Ce mélange trouve notamment son application en tant que matière électrochimiquement active d'électrode dans tout système électrochimique.

L'invention concerne en outre une électrode d'un système électrochimique, tel qu'un accumulateur électrochimique rechargeable, à électrolyte non aqueux, comprenant en tant que matière électrochimiquement active d'électrode, le mélange préparé par le procédé selon l'invention.

Cette électrode peut être aussi bien une électrode négative qu'une électrode positive.

Généralement une telle électrode comprend en outre un liant, et/ou un épaississant et/ou un surfactant et/ou un sel, éventuellement un ou des additif(s) conducteur(s) électronique(s), et un collecteur de courant.

L'invention a également trait à une cellule d'un accumulateur, batterie rechargeable à électrolyte organique, non aqueux, notamment d'une batterie au lithium et plus précisément d'une batterie Li-ion, comprenant au moins une telle électrode, ainsi qu'à l'accumulateur ou batterie comprenant une ou plusieurs de ces cellules.

L'accumulateur selon l'invention peut être une pile bouton.

L'invention va maintenant être décrite de manière plus précise dans la description détaillée qui suit, donnée à titre illustratif et non limitatif, en référence aux dessins joints.

### BRÈVE DESCRIPTION DES DESSINS

- La Figure 1 est une vue schématique en coupe verticale d'un accumulateur sous forme de pile bouton comprenant une électrode dont la matière électrochimiquement active est un mélange préparé par le procédé selon l'invention, tel que le mélange préparé dans les exemples 1, 2 et 3 ou bien une matière électrochimiquement active comparative telle que celle des exemples comparatifs ;
- La Figure 2 est un cliché obtenu par microscopie électronique à balayage (MEB) de TiO₂ de forme anatase (produit commercial, disponible auprès de la société ALDRICH^{®}). L'échelle indiquée sur la figure 2 représente 5 µm ;
- La Figure 3 est un cliché obtenu par microscopie électronique à balayage (MEB) d'un échantillon d'un mélange TiO₂ anatase (ALDRICH^{®}) / Carbone obtenu par le procédé de l'invention dans l'exemple 1. L'échelle indiquée sur la figure 3 représente 5 µm ;
- La Figure 4 est un graphique qui présente le premier cycle de charge/décharge à un régime de C/10 entre 1V et 3V vs. Li⁺/Li à 20°C d'une pile bouton fabriquée avec une électrode positive comprenant le mélange TiO₂-anatase/Carbone préparé par le procédé de l'invention dans l'exemple 1, et une électrode de lithium métallique.
   L'électrolyte est constitué du sel de lithium LiPF₆ [1 mol/L] dissout dans un mélange de carbonate d'éthylène, de carbonate de diméthyle et carbonate de propylène en proportion massique 1/3/1.
   En ordonnée est porté le potentiel (en Volts vs Li⁺/Li), et en abscisse est portée la Capacité spécifique (en mAh/g) ;

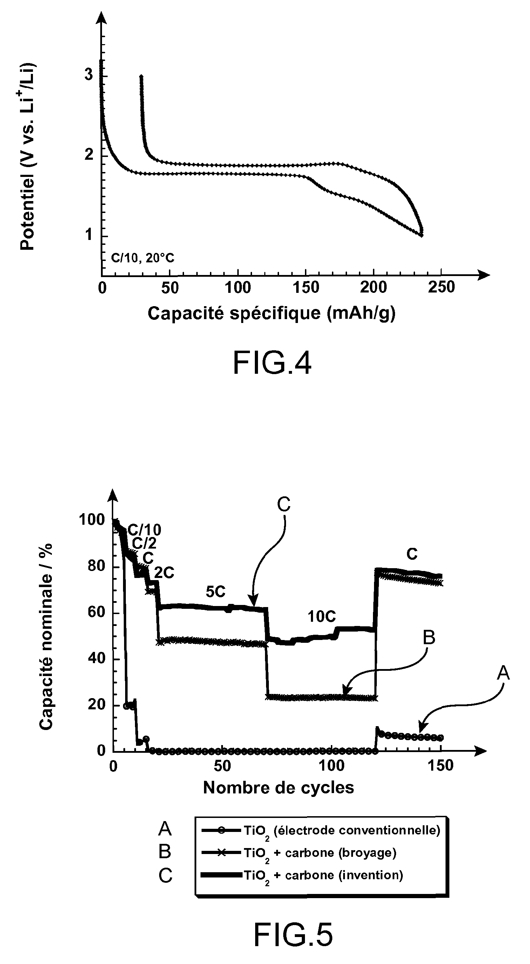

- La figure 5 est un graphique qui présente l'évolution du pourcentage de capacité entre 1V et 3V vs. Li⁺/Li (calculé sur la base de la capacité initiale à C/10) en fonction du nombre de cycles et du régime de charge/décharge pour des piles bouton fabriquées avec une électrode négative de lithium métallique et une électrode positive respectivement à base de TiO₂-anatase (électrode conventionnelle, courbe A), à base de TiO₂/Carbone mélangé par broyage (courbe B), ou comprenant le mélange TiO₂/Carbone préparé par le procédé de l'invention dans l'exemple 1 (courbe C).
   En ordonnée est portée la capacité nominale (en %), et en abscisse est porté le nombre de cycles ;

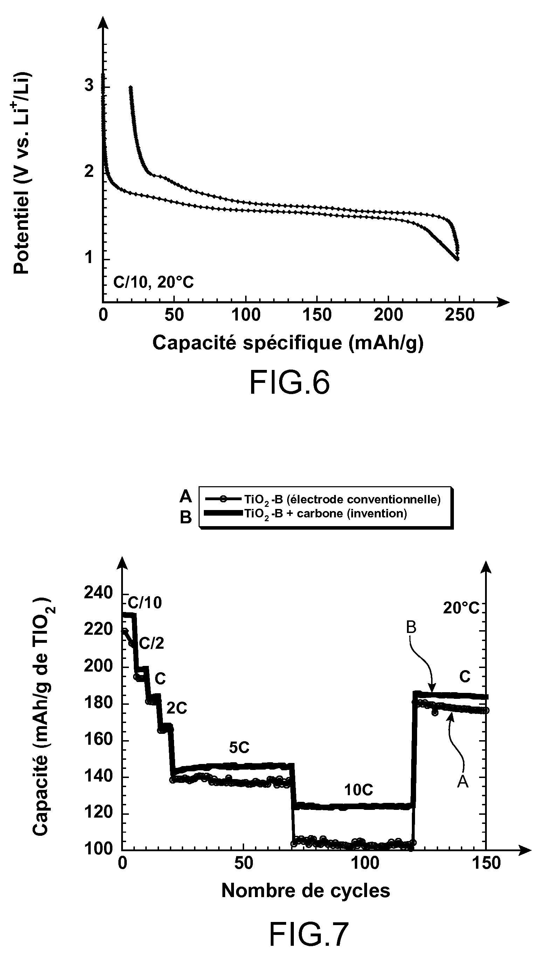

- La Figure 6 est un graphique qui présente le premier cycle de charge/décharge à un régime de C/10 entre 1V et 3V vs. Li⁺/Li à 20°C d'une pile bouton fabriquée avec une électrode positive comprenant le mélange TiO₂-anatase/Carbone préparé par le procédé de l'invention dans l'exemple 2, et une électrode de lithium métallique.
   L'électrolyte est constitué du sel de lithium LiPF₆ [1 mol/L] dissout dans un mélange de carbonate d'éthylène, de carbonate de diméthyle et carbonate de propylène en proportion massique 1/3/1.
   En ordonnée est porté le potentiel (en Volts vs Li⁺/Li), et en abscisse est portée la Capacité spécifique (en mAh/g) ;
- La Figure 7 est un graphique qui présente l'évolution de la capacité nominale entre 1V et 3V vs. Li⁺/Li à 20°C, en fonction du nombre de cycles et du régime de charge/décharge pour des piles bouton fabriquées avec une électrode négative de lithium métallique et une électrode positive respectivement à base de TiO₂-B (électrode conventionnelle, courbe A), ou comprenant le mélange TiO₂-B/Carbone préparé par le procédé de l'invention dans l'exemple 2 (Courbe B). En ordonnée est portée la capacité (en mAh/g de TiO₂), et en abscisse est porté le nombre de cycles ;

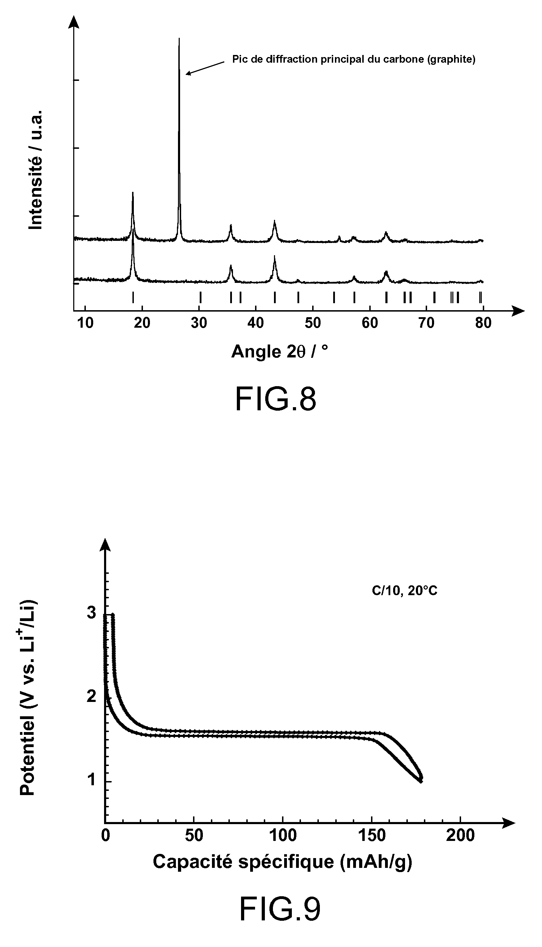

- La figure 8 montre un diagramme de diffraction des rayons X (anticathode de cuivre ; λ_{CUKα}) d'une poudre de Li₄Ti₅O₁₂ synthétisé dans l'exemple 3 (bas) et d'un mélange Li₄Ti₅O₁₂/Carbone préparé par le procédé de l'invention dans l'exemple 3 (haut). Les symboles verticaux correspondent aux positions de Bragg calculées pour le groupe d'espace Fd-3m, avec un paramètre de maille de 8,36(1) Å. En ordonnée est portée l'intensité (en unités arbitraires u.a.), et en abscisse est porté l'angle 2 thêta (en °) ;
- La Figure 9 est un graphique qui présente le premier cycle de charge/décharge à un régime de C/10 entre 1V et 3V vs. Li⁺/Li à 20°C d'une pile bouton fabriquée avec une électrode positive comprenant le mélange Li₄Ti₅O₁₂/Carbone préparé par le procédé de l'invention dans l'exemple 3, et une électrode de lithium métallique.
   L'électrolyte est constitué du sel de lithium LiPF₆ [1 mol/L] dissout dans un mélange de carbonate d'éthylène, de carbonate de diméthyle et carbonate de propylène en proportion massique 1/3/1.
   En ordonnée est porté le potentiel (en Volts vs Li⁺/Li), et en abscisse est portée la capacité spécifique (en mAh/g) ;

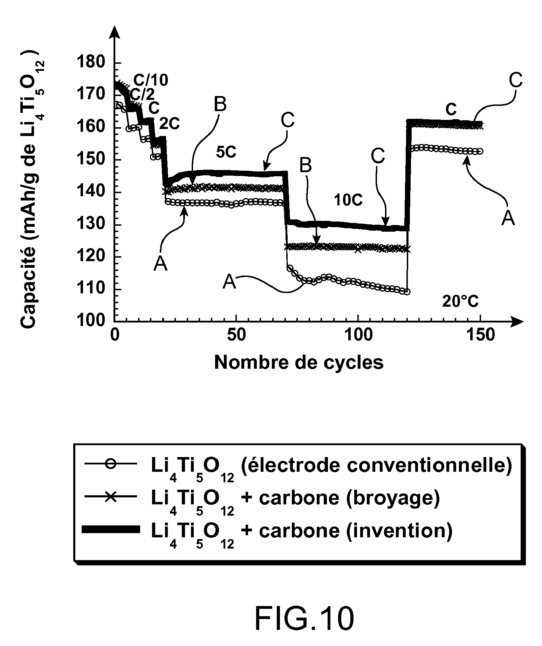

- La figure 10 est un graphique qui présente l'évolution de la capacité nominale entre 1V et 3V vs. Li⁺/Li en fonction du nombre de cycles et du régime de charge/décharge pour des piles bouton fabriquées avec une électrode négative de lithium métallique et une électrode positive respectivement à base de Li₄Ti₅O₁₂ (électrode conventionnelle, courbe A), à base de Li₄Ti₅O₁₂/carbone mélangé par broyage (courbe B), ou comprenant le mélange Li₄Ti₅O₁₂/carbone préparé par le procédé de l'invention dans l'exemple 3 (Courbe C). En ordonnée est portée la capacité nominale (en mAh/g de Li₄Ti₅O₁₂), et en abscisse est porté le nombre de cycles.

### EXPOSÉ DÉTAILLÉ DE MODES DE RÉALISATION PARTICULIERS

Cette description se réfère généralement plus particulièrement à un mode de réalisation dans lequel le matériau préparé par le procédé selon l'invention est le matériau actif d'électrode positive ou négative d'un accumulateur rechargeable aux ions lithium, mais il est bien évident que la description qui suit pourra être facilement étendue et adaptée le cas échéant, à toute application et tout mode de mise en oeuvre du matériau préparé par le procédé selon l'invention.

Dans la première étape du procédé selon l'invention, on prépare un milieu liquide contenant la poudre du composé actif d'électrode et la poudre du composé conducteur électronique.

On peut par exemple placer dans un récipient, réservoir, la poudre du composé actif d'électrode et ajouter à cette poudre la poudre du composé conducteur électronique et enfin ajouter à ces deux poudres le milieu liquide en l'introduisant dans le récipient ou réservoir.

Mais toute autre manière de procéder conduisant à un milieu liquide contenant les deux poudres est également possible. Ainsi, on peut ajouter successivement ou simultanément les deux poudres à un milieu liquide se trouvant dans un récipient ou réservoir.

Généralement, on met simplement en contact les deux poudres et le milieu liquide sans procéder à aucune agitation qui viserait par exemple à créer une dispersion des deux poudres dans le milieu liquide.

Le composé actif d'électrode peut être tout composé actif d'électrode notamment d'électrode d'accumulateurs rechargeables à électrolyte organique tels que les accumulateurs, batteries au Lithium et plus particulièrement les accumulateurs, batteries aux ions lithium.

Le composé actif d'électrode peut ainsi être choisi parmi les composés actifs d'électrode positive et les composés actifs d'électrode négative des batteries Li-ion en général.

L'électrode positive constitue généralement une source de lithium pour l'électrode négative. Cette électrode doit donc comprendre en tant que composé, matériau actif, un composé, matériau pouvant initialement, c'est-à-dire lors de la première charge, libérer des ions lithium, lesquels seront insérés à nouveau au cours de la décharge de l'accumulateur.

Le composé actif d'électrode mis en oeuvre dans le procédé selon l'invention pourra donc être choisi, dans le cas d'une électrode positive, par exemple parmi les oxydes lamellaires tels que LiCoO₂, LiNi_{0,8}Co_{0,5}Al_{0,5}O₂, LiNi_{1/3}Co_{1/3}Mn_{1/3}O₂ et leurs dérivés ; les oxydes spinelles, tels que LiMn₂O₄, LiNi_{0,5}Mn_{1,5}O₄, LiNi_{0,4}Mn_{1,6}O₄ et leurs dérivés ; et les composés, matériaux à charpente polyanionique tels que LiFePO₄, LiMnPO₄, LiCoPO₄, Li₃V₂(PO₄)₃, Li₂CoSiO₄, et leurs dérivés.

L'électrode négative n'étant généralement pas une source de lithium pour l'électrode positive, elle doit être généralement constituée d'un matériau pouvant initialement accepter les ions lithium extraits de l'électrode positive, et les restituer par la suite.

Le composé d'électrode mis en oeuvre dans le procédé selon l'invention, pourra donc être choisi par exemple, dans le cas d'une électrode négative, parmi les oxydes de titane tels que Li₄Ti₅O₁₂ ou TiO₂ sous la forme anatase ou bronze, le silicium, le soufre et le carbone.

Le composé actif d'électrode se présente sous la forme d'une poudre dont la taille des particules, généralement définie par leur diamètre peut être de 20 nm à 100 µm.

On peut dans le procédé selon l'invention utiliser un seul composé actif d'électrode ou bien plusieurs de ces composés.

Le composé conducteur électronique peut être choisi parmi tous les composés conducteurs électroniques connus de l'homme du métier comme les particules métalliques telles que les particules d'Ag, de Cu, de Ni ; le carbone, par exemple sous la forme de graphite, de noir de carbone, de fibres de carbone, de nanofils de carbone, de nanotubes de carbone, de nanosphères de carbone ; les polymères conducteurs électroniques ; et leurs mélanges.

Un composé conducteur électronique préféré est le carbone.

Le carbone peut être sous forme amorphe ou cristallisée. Le carbone peut présenter tout type de morphologie, par exemple il peut se présenter sous la forme de fibres, nanotubes, nanofils, nanosphères ou autres.

Le carbone peut en particulier se présenter sous la forme de graphite, par exemple d'un graphite synthétique. Une poudre de graphite synthétique est notamment disponible auprès de la société TIMCAL^{®} sous la dénomination Timrex^{®} SFG6.

Le composé conducteur électronique se présente sous la forme d'une poudre dont la taille des particules, généralement définie par leur diamètre peut être de 10 nm à 500 µm.

On peut dans le procédé selon l'invention utiliser un seul composé conducteur électronique ou bien plusieurs de ces composés.

Ainsi, on peut utiliser un seul type de carbone ou bien plusieurs types de carbone, issus de différentes sources et qui diffèrent par leur morphologie et/ou leur taille de particules et/ou leur forme cristalline.

Selon le procédé de l'invention, le composé, matériau actif d'électrode et le composé conducteur électronique sont des matériaux synthétisés, préparés préalablement au procédé de l'invention et de manière totalement indépendante, séparée, de celui-ci. Au contraire de certains des procédés de l'art antérieur on ne réalise pas, dans le procédé de l'invention, la synthèse *in situ* des deux composés à partir de précurseurs, et généralement à température élevée.

Le composé actif d'électrode et le composé conducteur électronique peuvent être préparés par des procédés connus de l'homme du métier ou bien il peut s'agir de composés disponibles dans le commerce.

Ainsi, dans les exemples qui suivent, on utilise du TiO₂ sous forme anatase commercial disponible notamment auprès de la société ALDRICH^{®}, ou bien du TiO₂ sous forme Bronze que l'on synthétise à partir de nitrate de potassium et de TiO₂ sous forme anatase préalablement au procédé selon l'invention, ou bien encore du Li₄Ti₅O₁₂ que l'on synthétise à partir de TiO₂ et de Li₂CO₃.

Le mélange initial de poudre de composé actif d'électrode et de poudre de composé conducteur électronique comprend généralement de 2 à 60%, par exemple 20% en masse du conducteur électronique tel que le carbone et de 40 à 98%, par exemple 80% en masse du composé actif d'électrode tel que TiO₂.

Le milieu liquide peut être choisi parmi l'eau notamment l'eau distillée ; les solutions aqueuses ; les solvants organiques, par exemple l'éthanol, la NMP (N-méthyl-pyrolidone), l'hexane, l'acétone ; et les mélanges de ceux-ci.

La concentration en composé actif d'électrode dans le milieu liquide est généralement de 10 à 100 g/L et la concentration en composé conducteur électronique dans le milieu liquide est généralement de 0,2 à 60 g/L, préférentiellement de 3 à 50 g/L.

On soumet ensuite le milieu liquide contenant les poudres à l'action d'ultrasons à haute, grande énergie.

Préalablement à l'action des ultrasons et comme on l'a déjà précisé, le milieu ne nécessite généralement aucune autre agitation, bien que cette dernière ne soit pas de nature à nuire au procédé décrit.

Ces ultrasons de haute énergie sont produits en plaçant la sonde d'un sonificateur haute intensité, haute énergie dans le milieu liquide.

La température du milieu liquide est maîtrisée, régulée, contrôlée de manière à ce qu'elle reste inférieure à la température d'ébullition du milieu liquide, et de préférence stable.

Dans le cas d'un milieu liquide constitué par de l'eau, la température du milieu liquide est généralement contrôlée pour ne pas dépasser 60°C.

La température du milieu liquide peut être notamment contrôlée, maîtrisée, régulée, en régulant, maîtrisant, contrôlant, la densité d'énergie ultrasonique appliquée au milieu liquide et en appliquant cette énergie par intermittence, c'est-à-dire en observant des temps de pause dans l'application de cette énergie au milieu liquide.

La densité d'énergie peut ainsi être par exemple de 150 à 700 W/L de milieu liquide contenant les poudres.

Les ultrasons peuvent être appliqués par intermittence pendant des durées généralement de 1 à 10 secondes, séparées par des temps de pause généralement de 1 à 10 secondes.

La durée totale d'application des ultrasons ou durée de sonification est généralement de 1 minute à 40 heures, de préférence de 30 minutes à 30 heures, y compris les pauses.

Le principe de l'action des ultrasons sur le milieu liquide repose sur la formation de microbulles de vide dans la solution suite à l'application de vibrations mécaniques amplifiées par une sonde.

L'éclatement de ces microbulles de vide dans le milieu liquide selon un phénomène dit de cavitation libère une énergie considérable permettant une agitation intense de la solution et assure ainsi l'obtention d'un mélange intime des particules des deux composés sans entraîner notamment de modification structurale du composé actif d'électrode.

A l'issue du traitement par les ultrasons, le milieu liquide est éliminé en totalité du mélange préparé par sonification. Dans le cas où le milieu liquide est de l'eau ou une solution aqueuse, on procède donc à une déshydratation du mélange.

Par élimination en totalité, on entend que la teneur en milieu liquide dans le mélange final est généralement inférieure à 0,5% ou 5000 ppm.

Cette élimination du milieu liquide est généralement réalisée au moyen d'un traitement thermique ou d'une succession de traitements thermiques et peut être effectuée en portant le mélange à une température supérieure à la température d'ébullition du milieu liquide.

Par exemple, notamment dans le cas où le milieu liquide est de l'eau ou une solution aqueuse, on peut tout d'abord effectuer une étape de déshydratation partielle à la pression atmosphérique par exemple à 55°C jusqu'à évaporation de l'eau, puis ensuite une étape de déshydratation complète de la poudre par chauffage à une température généralement de 100°C à 400°C, par exemple de 400°C, pendant 30 minutes à 10 heures, par exemple 1 heure à 3 heures.

Bien entendu, la température du traitement thermique est contrôlée de manière à rester en deçà du seuil de décomposition des composés formant le mélange selon l'invention, de façon à ne pas altérer ses propriétés.

Cette dernière étape de déshydratation est généralement réalisée sous une atmosphère inerte, par exemple d'argon, pour éviter toute oxydation des composés. Notamment dans le cas du carbone, une telle atmosphère inerte lors de l'étape de déshydratation finale permet d'éviter l'oxydation du carbone et la disparition d'une partie de celui-ci sous la forme de dioxyde de carbone.

Eventuellement, afin de réaliser la déshydratation partielle, une filtration peut être envisagée, préalablement au traitement thermique.

Après avoir éliminé le milieu liquide du mélange de poudre soumis à l'action des ultrasons, en particulier après l'étape de déshydratation décrite ci-dessus, on recueille un mélange de poudre de matière active d'électrode et de poudre de composé conducteur électronique.

Le mélange obtenu par le procédé de l'invention est homogène, et le conducteur électronique est correctement dispersé et on observe une bonne répartition du conducteur électronique dans le réseau formé par le composé actif d'électrode.

Le mélange ainsi préparé selon l'invention peut être utilisé en tant que matière électrochimiquement active dans tout système électrochimique.

Plus précisément, le matériau préparé selon l'invention peut notamment être utilisé en tant que matière électrochimiquement active d'électrode positive ou négative dans tout système électrochimique à électrolyte non aqueux.

Cette électrode positive ou négative comprend, outre la matière électrochimiquement active d'électrode positive ou négative préparée par le procédé selon l'invention telle que définie plus haut, un liant qui est généralement un polymère organique, éventuellement un ou des additif(s) conducteur(s) électronique(s), éventuellement un épaississant, éventuellement un surfactant ou agent tensioactif, éventuellement un sel, et un collecteur de courant.

Le polymère organique peut être choisi parmi les polytétrafluoroéthylènes (PTFE), les poly (fluorure de vinylidène)s (PVDF), les copolymères PVDF-HFP (hexafluorure de propylène) ; les polyéthers ; les polyesters ; les poly(méthacrylate de méthyle)s ; les polyacrylonitriles ; et les élastomères et caoutchoucs naturels ou synthétiques tels que le caoutchouc styrène-butadiène et le CMC-SBR (carboxyméthylcellulose-caoutchouc styrène butadiène).

L'additif conducteur électronique éventuel de l'électrode, qui vient donc en plus du composé conducteur électronique du mélange préparé par le procédé selon l'invention, peut être choisi parmi les particules métalliques telles que les particules d'Ag ; de Cu, de Ni ; le carbone, par exemple sous la forme de graphite, de noir de carbone, de fibres de carbone, de nanofils de carbone, de nanotubes de carbone, de nanosphères de carbone ; les polymères conducteurs électroniques ; et leurs mélanges.

L'épaississant peut être choisi parmi les composés cellulosiques tels que la carboxyméthylcellulose et l'hydroxypropylcellulose.

Le surfactant ou agent tensioactif peut être choisi parmi les agents dispersants et les polyélectrolytes.

Le collecteur de courant se présente généralement sous la forme d'une feuille de cuivre, nickel ou aluminium.

L'électrode selon l'invention comprend généralement de 70 à 94%, par exemple 80% en masse de matière électrochimiquement active, de 1 à 20% en masse, de préférence de 1 à 10% en masse du liant, éventuellement de 0,5 à 5% en masse du surfactant, éventuellement de 1 à 10% de l'épaississant, éventuellement de 1 à 5% du sel, et éventuellement de 1 à 15% en masse du ou des additif(s) conducteur(s) électronique(s).

Une telle électrode peut être préparée de manière classique en formant une dispersion, suspension, pâte ou encre avec la matière électrochimiquement active, le liant, éventuellement l'épaississant, éventuellement le surfactant, éventuellement le sel, et éventuellement le ou les additif(s) conducteur (s) et un solvant, en déposant, enduisant ou imprimant cette dispersion, suspension, pâte ou encre sur un collecteur de courant, en séchant l'encre, pâte, dispersion ou suspension déposée, et en calandrant, pressant l'encre, pâte, suspension ou dispersion déposée, séchée et le collecteur de courant.

La suspension ou dispersion peut être une suspension ou dispersion aqueuse comprenant un liant soluble dans l'eau ou bien une suspension ou dispersion dans un solvant organique.

L'encre, pâte, dispersion ou suspension peut être appliquée par tout procédé adéquat tel que l'enduction, le couchage, l'héliogravure, la flexographie, l'offset.

Le système électrochimique dans lequel est mise en oeuvre l'électrode selon l'invention, peut être notamment un accumulateur électrochimique rechargeable à électrolyte non aqueux tel qu'un accumulateur ou une batterie au lithium, et plus particulièrement un accumulateur « Li-ion ».

Au moins l'une parmi l'électrode positive ou négative d'un tel système électrochimique, comprend en tant que matière électrochimiquement active le matériau préparé par le procédé selon l'invention.

L'autre électrode, négative ou positive, peut comprendre le matériau selon l'invention, ou un autre matériau actif.

Il est donc possible que les deux électrodes comprennent un mélange selon l'invention.

L'électrode négative ou positive éventuelle, qui ne comprend pas en tant que matière électrochimiquement active le matériau, mélange selon l'invention, comprend une matière électrochimiquement active différente du matériau selon l'invention, un liant, éventuellement un ou plusieurs additif(s) conducteur(s) électronique(s) et un collecteur de courant.

Le liant et le ou les additif(s) électronique(s) éventuel(s) ont déjà été décrits plus haut.

La matière électrochimiquement active de l'électrode négative ou positive éventuelle qui ne comprend pas le matériau selon l'invention en tant que matière électrochimiquement active peut être choisie parmi tous les matériaux connus de l'homme du métier.

Lorsque le matériau selon l'invention est la matière électrochimiquement active de l'électrode positive, alors la matière électrochimiquement active de l'électrode négative peut être choisie par exemple parmi le lithium et tout matériau connu de l'homme du métier dans ce domaine de la technique, y compris le matériau préparé selon l'invention.

Lorsque la matière électrochimiquement active de l'électrode négative est formée par le matériau selon l'invention, la matière électrochimiquement active de l'électrode positive peut être faite de tout matériau connu et adaptable par l'homme du métier, ou d'un matériau préparé selon l'invention.

L'électrolyte peut être solide ou liquide.

Lorsque l'électrolyte est liquide, il est constitué par exemple par une solution d'au moins un sel conducteur tel qu'un sel de lithium dans un solvant organique, et/ou un liquide ionique.

Le sel de lithium, dissout dans le solvant peut être supporté par un élément séparateur disposé entre les deux électrodes de l'accumulateur et imbibé d'électrolyte liquide.

Lorsque l'électrolyte est solide, il comprend une matière polymère et un sel de lithium, c'est-à-dire un sel comportant au moins le cation Li⁺.

Le sel de lithium peut être choisi par exemple parmi LiAs₆, LiClO₄, LiBF₄, LiPF₆, LiBOB, LiODBF, LiB(C₆H₅), LiR_{F}SO₃ par exemple LiCF₃SO₃, LiCH₃SO₃, LiN(R_{F}SO₂)₂ par exemple LiN(CF₃SO₂)₂ (LiTFSI) ou LiN(C₂F₅SO₂)₂ (LiBETI), LiC(R_{F}SO₂)₃, par exemple LiC(CF₃SO₂)₃ (LiTFSM), dans lesquels R_{F} est choisi parmi un atome de fluor et un groupement perfluoroalkyle comprenant de 1 à 8 atomes de carbone, LiTFSI est l'acronyme de lithium bis(trifluorométhylsulfonyl)imide, LiBOB celui de lithium bis(oxalato)borate, et LiBETI celui de lithium bis(perfluoroéthylsulfonyl)imide.

Le solvant organique est préférentiellement un solvant compatible avec les constituants des électrodes, relativement peu volatil, aprotique et relativement polaire. On peut citer par exemple les éthers, les esters et leurs mélanges.

Les éthers sont notamment choisis parmi les carbonates linéaires comme le carbonate de diméthyle(DMC), le carbonate de diéthyle (DEC), le carbonate de méthyléthyle (EMC), le carbonate de dipropyle (DPC), les carbonates cycliques comme le carbonate de propylène (PC), le carbonate d'éthylène (EC), et le carbonate de butylène ; les esters d'alkyle comme les formiates, les acétates, les propionates et les butyrates ; le gamma butyrolactone, le triglyme, le tétraglyme, le lactone, le diméthylsulfoxyde, le dioxolane, le sulfolane et leurs mélanges. Les solvants sont préférentiellement des mélanges incluant EC/DMC, EC/DEC, EC/PC.

La matière polymère de l'électrolyte solide peut être choisie parmi le POE (polyoxyde d'éthylène), le PAN (polyacrylonitrile), le PMMA (polyméthacrylate de méthyle), le PVdF (polyfluorure de vinylidène) ou un de leurs dérivés.

L'accumulateur peut avoir notamment la forme d'une pile bouton.

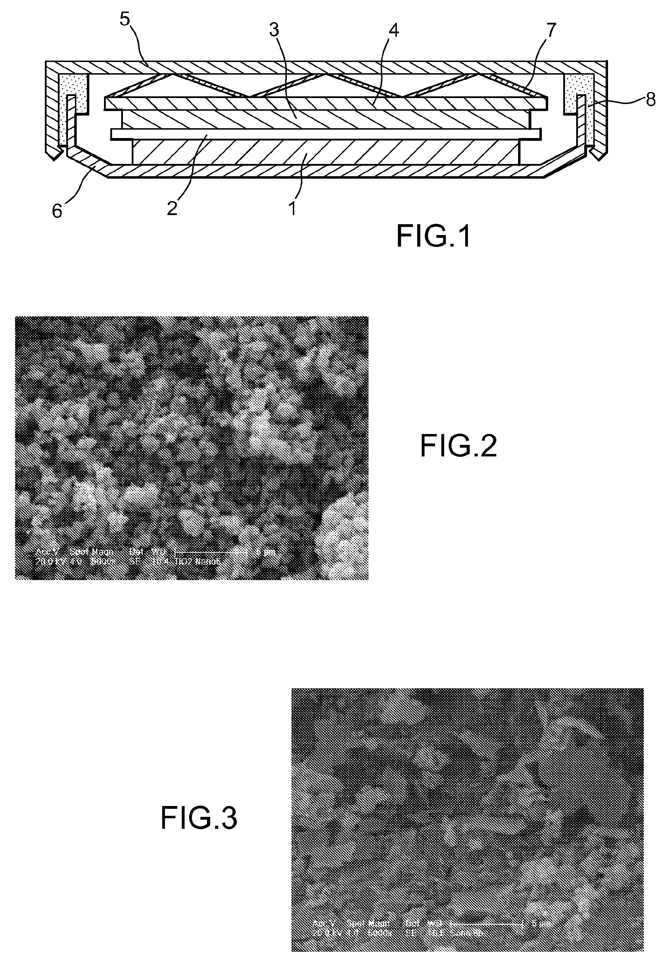

Les différents éléments d'une pile bouton, en acier inoxydable 316L, sont décrits sur la figure 1.

Ces éléments sont les suivants :
- les parties supérieure (5) et inférieure (6) du boîtier en inox,
- le joint en polypropylène (8),
- les cales en inox (4), qui servent à la fois par exemple à la découpe du lithium métal puis, plus tard, à assurer le bon contact des collecteurs de courant avec les parties externes de la pile,
- un ressort (7), qui assure le contact entre tous les éléments,
- un séparateur microporeux (2) imbibé d'électrolyte,
- des électrodes (1) (3).

L'invention va maintenant être décrite en référence aux exemples suivants donnés à titre illustratif et non limitatif.

### Exemple 1 :

Dans cet exemple, on prépare par le procédé selon l'invention un mélange d'une poudre d'un composé actif d'électrode négative, à savoir le TiO₂ de forme anatase, et d'une poudre d'un composé électroniquement conducteur, à savoir le graphite.

Une poudre de TiO₂ de forme anatase disponible auprès de la société ALDRICH_{®}, dont le diamètre des particules est inférieur à 25 nanomètres, est placée dans un bécher.

Le conducteur électronique utilisé dans cet exemple est une poudre de graphite synthétique disponible auprès de la société TIMCAL^{®} sous la dénomination TIMREX^{®} SFG6.

Le graphite est ajouté au TiO₂ dans le bécher.

Le mélange est composé à 80% massique de TiO₂ anatase et à 20% massique de conducteur électronique.

Le mélange est mis dans de l'eau distillée. La concentration est de 70g de TiO₂/L.

La préparation ne subit aucune agitation préalable.

On place la sonde d'un sonificateur haute intensité de type Sonics^{®}, VCX 500W « *ultrasonic processor* » dans le bécher au coeur de la préparation. Le montage est installé dans un caisson d'isolation sonore.

La puissance maximale délivrée est comprise entre 30 et 40 W et la température est contrôlée pour ne pas dépasser 60°C.

Une pause de 6 secondes est programmée toutes les 3 secondes.

Cette étape du procédé selon l'invention dure 20 heures.

Le mélange préparé par sonification subit ensuite une étape de déshydratation à pression atmosphérique à 55°C jusqu'à évaporation de l'eau.

La poudre est ensuite complètement déshydratée après chauffage à 400°C pendant 3 heures. Cette étape est réalisée sous atmosphère inerte pour éviter l'oxydation du carbone et une perte en dioxyde de carbone.

Les clichés obtenus par microscopie électronique à balayage (« MEB ») du TiO₂ de forme anatase commercial ALDRICH^{®} (figure 2) et du mélange obtenu par le procédé selon l'invention dans le présent exemple (figure 3) montrent qu'aucun changement de morphologie des particules du précurseur TiO₂ anatase n'est repérable après le traitement suivant le procédé de l'invention.

Le carbone utilisé dans le présent exemple se présente sous la forme de plaquettes (morphologie du graphite).

Le mélange obtenu par le procédé de l'invention est homogène ; le conducteur électronique est correctement dispersé.

Le mélange TiO₂/carbone préparé dans le présent exemple conformément au procédé selon l'invention est ensuite testé en tant que matière électrochimiquement active d'électrode positive dans une batterie, accumulateur lithium métal (*test en demi-pile*) de type « pile-bouton ».

Cette pile bouton est montée en respectant scrupuleusement le protocole suivant :
Sont ainsi empilés à partir du fond du boîtier de la pile, comme cela est montré sur la figure 1 :
   - une électrode négative de lithium (16 mm de diamètre, 130 µm d'épaisseur) (1) déposée sur un disque de nickel servant de collecteur de courant, mais on pourrait utiliser toute autre matière active d'électrode négative, choisie notamment parmi les matières actives classiques utilisées dans la technique pour une électrode négative en milieu non aqueux ;
   - 200 µL d'électrolyte liquide à base de sel LiPF₆ à raison de 1 mol/L en solution dans un mélange de carbonate d'éthylène, carbonate de diméthyle et carbonate de propylène en proportions massiques 1/3/1, mais on pourrait utiliser tout autre électrolyte liquide non aqueux connu dans la technique tel qu'un mélange de carbonate de diméthyle et de carbonate de propylène en toutes proportions ;
   - l'électrolyte imbibe un séparateur qui est une membrane microporeuse en polyoléfine, plus précisément une membrane microporeuse en polypropylène Celgard^{®} (2) Ø 16,5 mm ;
   - une électrode positive (3) constituée d'un disque de 14 mm de diamètre prélevée sur un film de 25 µm d'épaisseur comprenant le mélange de TiO₂ et de carbone préparé comme décrit ci-dessus (80 % en masse), du noir de carbone (10 % en masse) en guise de matériau conducteur, et de l'hexafluorure de polyvinylidène (10 % en masse) en guise de liant, le tout étant déposé sur un collecteur de courant en aluminium (feuillard de 20 µm d'épaisseur);

   - un disque ou cale en inox (4),
   - un couvercle en inox (5) et un fond en inox (6),
   - un ressort en inox (7) et un joint en polypropylène (8).

Le boîtier en inox est alors fermé à l'aide d'une sertisseuse, le rendant parfaitement étanche à l'air. Pour vérifier si la pile est opérationnelle, celle-ci est contrôlée par la mesure de la tension à l'abandon.

Du fait de la forte réactivité du lithium et de ses sels à l'oxygène et à l'eau, la mise en pile bouton se fait en boîte à gants. Celle-ci est maintenue en légère surpression sous atmosphère d'argon anhydre. Des capteurs permettent de surveiller continuellement la concentration en oxygène et en eau. Typiquement, ces concentrations doivent rester inférieures à la ppm.

Le mélange préparé par le procédé selon l'invention dans le présent exemple et monté dans une pile bouton conformément à la procédure décrite ci-dessus subit des cyclages, c'est-à-dire des charges et des décharges à différents régimes à courant constant, pendant un nombre déterminé de cycles, pour évaluer la capacité pratique de la pile.

Par exemple, une batterie qui charge en régime C/20 est une batterie à laquelle on impose un courant constant pendant 20 heures dans le but de récupérer toute sa capacité C. La valeur du courant est égale à la capacité C divisée par le nombre d'heures de charge, à savoir dans ce cas 20 heures.

Un premier protocole de test est donc réalisé selon le cyclage suivant avec au total 150 cycles (Figure 5) :
- 5 cycles de charge - décharge à C/10,
- 5 cycles de charge - décharge à C/2,
- 5 cycles de charge - décharge à C,
- 5 cycles de charge - décharge à 2C,
- 50 cycles de charge - décharge à 5C,
- 50 cycles de charge - décharge à 10C,
- 30 cycles de charge - décharge à C.

A 20°C, sous un régime de C/10, ce système délivre une capacité d'environ 206 mAh/g de TiO₂ (Figure 4).

### Exemple 1A :

On fabrique dans les mêmes conditions que dans l'exemple 1 une électrode positive (qui est une électrode conventionnelle, classique) comprenant en tant que matière électrochimiquement active d'électrode le produit TiO₂ anatase commercial utilisé dans l'exemple 1 et on monte cette électrode avec du PVDF et éventuellement du noir de carbone dans une pile bouton de la même manière que dans l'exemple 1.

On effectue ensuite le même protocole de test que dans l'exemple 1 suivant le même cyclage.

### Exemple 1B :

Un mélange de TiO₂ anatase commercial utilisé dans l'exemple 1 et du même carbone que celui utilisé dans l'exemple 1 est préparé dans les proportions 80/20 en pourcentage massique.

Ce mélange est réalisé par broyage au mortier pendant 20 minutes.

On fabrique une électrode positive comprenant en tant que matière électrochimiquement active le mélange ainsi préparé par broyage au mortier.

Dans cet exemple comparatif, l'électrode est élaborée de façon conventionnelle en ajoutant en solution organique 80% de matière active, 10% de carbone et 10% de liant hexafluorure de polyvinylidène, avant dépôt sur un collecteur de courant.

On monte ensuite cette électrode dans une pile bouton de la même manière que dans l'exemple 1.

On effectue ensuite le même protocole de test que dans l'exemple 1 suivant le même cyclage.

Sous un régime de 10C entre 1V et 3V vs. Li⁺/Li, le mélange préparé suivant le procédé de l'invention délivre une capacité d'environ 110 mAh/g, soit 53% de la capacité réversible obtenue au premier cycle à régime lent (Figure 5).

Dans la gamme de potentiels balayée, seul TiO₂-anatase est actif électrochimiquement.

Le mélange préparé par broyage (Exemple 1B) délivre une capacité d'environ 55 mAh/g, soit 23% de la capacité obtenue lors du premier cycle de charge/décharge à régime lent de la pile bouton (Figure 5).

Enfin, la capacité délivrée par TiO₂ anatase seul (électrode conventionnelle, Exemple 1A) n'ayant donc subi aucune étape du procédé de l'invention, est nulle (Figure 5).

### Exemple 2 :

Dans cet exemple, on prépare un mélange d'une poudre d'un composé actif d'électrode négative, à savoir le TiO₂ de forme bronze, et d'une poudre d'un composé électroniquement conducteur, à savoir le graphite.

Le TiO₂-B est préparé à partir de 6,64 grammes de nitrate de potassium (KNO₃ ; Merck^{®}) et de 10 grammes d'oxyde de titane de forme anatase (TiO₂-anatase; Aldrich^{®}). Après broyage, le mélange est chauffé à 900°C pendant 15 heures. Le composé K₂Ti₄O₉ préparé est ensuite introduit dans une solution aqueuse acidifiée (HNO₃, 3 mol/L). Une agitation mécanique est maintenue pendant 3 heures à température ambiante, puis la solution est centrifugée. La poudre récupérée est à nouveau introduite dans une solution aqueuse acidifiée de même concentration. L'étape est répétée trois fois. Après la troisième centrifugation, la poudre est lavée plusieurs fois à l'eau déminéralisée.

Finalement, la poudre est chauffée à 400°C pendant 3 heures pour obtenir un oxyde de titane TiO₂ de forme structurale de type « Bronze » noté TiO₂-B. Les particules sont de taille micrométrique. La surface spécifique du produit obtenu est de 28 m²/g.

Un conducteur électronique, qui est du graphite synthétique disponible auprès de la société TIMCAL^{®} sous la dénomination TIMREX^{®} SFG6, est ajouté à l'échantillon de TiO₂-B ainsi synthétisé. La matière active TiO₂-B représente 80% massique du mélange.

Les deux matériaux sont mis dans de l'eau distillée (33 grammes de TiO₂-B/L) et sont mélangés suivant le procédé de l'invention.

L'énergie mécanique ultrasonique de haute fréquence (30W) est fournie par un sonificateur grande intensité (Sonics ®, VCX 500W « *ultrasonic processor »*) placé dans une enceinte d'isolation sonore pendant 30 heures à température ambiante.

La préparation est ensuite portée à 55°C pendant 24h.

La poudre de TiO₂-B/Carbone obtenue est alors déshydratée à 400°C pendant une heure sous argon pour conserver les proportions massiques 80/20 du mélange.

Le mélange TiO₂-B/carbone préparé dans le présent exemple conformément au procédé selon l'invention a été ensuite testé en tant que matériau actif d'électrode positive dans une batterie, accumulateur lithium métal (*test en demi-pile*) de type « pile-bouton ».

Cette pile bouton est montée en respectant le même protocole que dans l'exemple 1 sauf que l'électrode positive (3) est constituée d'un disque de 14 mm de diamètre prélevée sur un film de 25 µm d'épaisseur comprenant le mélange de TiO₂ et de carbone préparé comme décrit ci-dessus (90% en masse), et de l'hexafluorure de polyvinylidène (10% en masse) en guise de liant, le tout étant déposé sur un collecteur de courant en aluminium (feuillard de 20 µm d'épaisseur).

On effectue ensuite le même protocole de test que dans l'exemple 1 suivant le même cyclage.

A 20°C, entre 1V et 3V vs. Li⁺/Li, sous un régime de C/10, ce système délivre une capacité réversible d'environ 230 mAh/g de TiO₂-B (Figure 6).

### Exemple 2A :

On fabrique dans les mêmes conditions que dans l'exemple 2 une électrode positive (qui est une électrode conventionnelle, classique) comprenant en tant que matière électrochimiquement active d'électrode le produit TiO₂ Bronze synthétisé dans l'exemple 2 et on monte cette électrode dans une pile bouton de la même manière que dans l'exemple 2.

On effectue ensuite le même protocole de test que dans l'exemple 2 suivant le même cyclage.

Sous un régime de 10C, le TiO₂-B n'ayant subi aucune étape du procédé de l'invention (Exemple 2A) délivre une capacité de 103 mAh/g (Figure 7). Le mélange préparé suivant le procédé de l'invention (Exemple 2) délivre quant à lui une capacité d'environ 125 mAh/g (Figure 7).

Entre 1V et 3V vs. Li⁺/Li, le carbone, conducteur électronique présent dans le mélange préparé selon l'invention est inactif électrochimiquement.

### Exemple 3 :

Dans cet exemple, on prépare un mélange d'une poudre d'un composé actif d'électrode négative à savoir le Li₄Ti₅O₁₂, et d'une poudre d'un composé électroniquement conducteur, à savoir le graphite.

L'oxyde de titane Li₄Ti₅O₁₂ est préparé en mélangeant 201,05 grammes de TiO₂ disponible auprès de la société Huntsman^{®} avec 76,11 grammes de Li₂CO₃ disponible auprès de la société Aldrich^{®} dans un broyeur planétaire en présence d'heptane pendant 2 heures.

Après séchage du mélange, le broyat est chauffé à 500°C pendant 15 heures, puis à 680°C pendant 15 heures, et finalement à 900°C pendant 5 heures. Le produit est ensuite homogénéisé dans un broyeur planétaire pendant 1 heure, puis chauffé à nouveau à 900°C pendant 5 heures. Un broyage final de 24 heures est alors réalisé avant de porter la poudre directement à 500°C pendant 15 minutes sous atmosphère d'argon (tube en quartz, scellé sous argon), et de refroidir rapidement à la température ambiante. Le diagramme de diffraction des rayons X fait apparaître un composé Li₄Ti₅O₁₂ pur et bien cristallisé (Figure 8).

Un échantillon de Li₄Ti₅O₁₂ ainsi préparé est placé dans un bécher contenant un conducteur électronique qui est du graphite synthétique, disponible auprès de la société TIMCAL^{®} sous la dénomination TIMREX^{®} SFG6. La quantité de carbone correspond à 20% massique du mélange Li₄Ti₅O₁₂/carbone. Un volume d'eau distillée est ajouté dans le bécher pour obtenir une concentration de 20 g/L de Li₄Ti₅O₁₂. Après installation de la sonde d'un sonificateur (Sonics ®, VCX 500W « *ultrasonic processor* ») au sein de la préparation, une énergie mécanique ultrasonique d'une puissance de 35W est délivrée par intermittence avec une pause toutes les 6 secondes entre des intervalles de 3 secondes au cours desquels on applique les ultrasons, pendant 24 heures à température ambiante. Le mélange matière active/carbone est séché à 55°C pendant 24 heures, puis à 400°C pendant trois heures sous argon pour éliminer l'eau et obtenir un matériau d'électrode pour accumulateur. Le procédé de préparation de l'invention ne modifie pas la structure du composé actif électrochimiquement (Figure 8).

Dans cet exemple, le carbone utilisé est cristallisé.

Le mélange Li₄Ti₅O₁₂/carbone préparé dans le présent exemple conformément au procédé selon l'invention a été ensuite testé en tant que matériau actif d'électrode positive dans une batterie, accumulateur lithium métal (*test en demi-pile*) de type « pile-bouton ».

Cette pile bouton est montée en respectant le même protocole que dans l'exemple 1 sauf que l'électrode positive (3) est constituée d'un disque de 14 mm de diamètre prélevée sur un film de 25 µm d'épaisseur comprenant le mélange de Li₄Ti₅O₁₂ et de carbone préparé comme décrit ci-dessus (80% en masse), de l'hexafluorure de polyvinylidène (10% en masse) en guise de liant, et du noir de carbone (10% en masse), le tout étant déposé sur un collecteur de courant en aluminium (feuillard de 20 µm d'épaisseur).

On effectue ensuite le même protocole de test que dans l'exemple 1 suivant le même cyclage.

A 20°C, sous un régime de C/10, ce système délivre une capacité d'environ 174 mAh/g de Li₄Ti₅O₁₂ (figure 9).

### Exemple 3A :

Le produit Li₄Ti₅O₁₂ synthétisé dans l'exemple 3 qui n'a pas subi le procédé de préparation de l'invention est testé en pile bouton dans les mêmes conditions de préparation d'électrode, de fabrication de la pile bouton et de cyclage que celles de l'exemple 3.

L'électrode positive est donc dans ce cas une électrode conventionnelle, classique.

### Exemple 3B :

Un mélange de 80% massique de Li₄Ti₅O₁₂ utilisé dans l'exemple 3 avec 20% massique du même carbone utilisé dans l'exemple 3 est préparé manuellement dans un mortier en agate.

Ce mélange est également testé en pile bouton dans les mêmes conditions de préparation d'électrode, de fabrication de la pile et de cyclage que celles des exemples 3 et 3A.

Sous un régime de 10C entre 1V et 3V vs. Li⁺/Li, le mélange préparé suivant le procédé de l'invention délivre une capacité d'environ 130 mAh/g (Figure 10). Le mélange préparé par broyage manuel délivre une capacité d'environ 122 mAh/g (Figure 10). Enfin, la capacité délivrée par Li₄Ti₅O₁₂ n'ayant subi aucune étape du procédé de l'invention est d'environ 112 mAh/g (Figure 10).

## Revendications

1. Procédé de préparation d'un mélange d'une poudre d'un composé actif d'électrode et d'une poudre d'un composé conducteur électronique, dans lequel on réalise les étapes successives suivantes :
- on prépare un milieu liquide contenant la poudre du composé actif d'électrode et la poudre du composé conducteur électronique ;
- on soumet le milieu liquide contenant la poudre du composé actif d'électrode et la poudre du composé conducteur électronique à l'action d'ultrasons de haute énergie produits en plaçant la sonde d'un sonificateur haute intensité, haute énergie, dans le milieu liquide, la densité d'énergie produite par les ultrasons étant de 50 à 1000 W/L, de préférence de 150 à 700 W/L, et de préférence encore de 300 à 500 W/L du milieu liquide ;
- on élimine le milieu liquide ;
- on recueille le mélange de la poudre du composé actif d'électrode et de la poudre du composé conducteur électronique.

2. Procédé selon la revendication 1 dans lequel l'action des ultrasons est régulée de telle sorte qu'elle permette de maintenir une température du milieu liquide inférieure à la température d'ébullition dudit milieu liquide, et de préférence stable.

3. Procédé selon l'une quelconque des revendications précédentes, dans lequel le milieu liquide est soumis à l'action des ultrasons de manière intermittente ; de préférence, le milieu liquide est soumis à l'action des ultrasons pendant des périodes de 1 à 10 secondes en observant des pauses d'une durée de 1 à 10 secondes entre deux périodes.

4. Procédé selon l'une quelconque des revendications précédentes dans lequel le milieu liquide est soumis à l'action des ultrasons pendant une durée totale de 1 minute à 40 heures, de préférence de 30 minutes à 30 heures.

5. Procédé selon l'une quelconque des revendications précédentes dans lequel le milieu liquide est choisi parmi l'eau ; les solutions aqueuses ; les solvants organiques, par exemple l'éthanol, la NMP (N-méthyl-pyrolidone), l'hexane, l'acétone ; et les mélanges de ceux-ci.

6. Procédé selon l'une quelconque des revendications précédentes dans lequel le mélange de la poudre du composé actif d'électrode et de la poudre du conducteur électronique est insoluble dans le milieu liquide.

7. Procédé selon l'une quelconque des revendications précédentes dans lequel le composé actif d'électrode est choisi parmi les composés actifs d'électrode positive et les composés actifs d'électrode négative des batteries Li-ion, et les composés actifs d'électrode positive des batteries lithium métal ; de préférence, le composé actif d'électrode est choisi parmi les oxydes de titane tels que TiO₂ sous forme bronze ou anatase, Li₄Ti₅O₁₂ ; les composés à charpente polyanionique tels que LiFePO₄, LiMnPO₄, et Li₃V₂ (PO₄)₃ ; les oxydes lamellaires tels que LiCoO₂, et LiNi_{0,8}Co_{0,15}Al_{0,05}O₂ ; les oxydes spinelles tels que LiMn₂O₄, et LiNi_{0,5}Mn_{1,5}O₄ ; le silicium ; le soufre ; le carbone ; le carbone graphite ; et leurs mélanges.

8. Procédé selon l'une quelconque des revendications précédentes dans lequel le composé conducteur électronique est choisi parmi les particules métalliques telles que les particules d'Ag, de Cu, de Ni ; le carbone, par exemple sous la forme de graphite, de noir de carbone, de fibres de carbone, de nanofils de carbone, de nanotubes de carbone, de nanosphères de carbone ; les polymères conducteurs électroniques ; et leurs mélanges ; de préférence, le composé conducteur électronique est un carbone ou un mélange de carbones choisi(s) parmi les carbones amorphes ou cristallisés, sous la forme de fibres, nanotubes, nanofils ou nanosphères.

9. Procédé selon l'une quelconque des revendications précédentes dans lequel le composé conducteur électronique tel que le carbone représente de 2 à 60% en masse du mélange.

10. Mélange d'une poudre d'un composé actif d'électrode et d'une poudre d'un composé conducteur électronique susceptible d'être préparé par le procédé selon l'une quelconque des revendications 1 à 9.

11. Électrode comprenant en tant que matière électrochimiquement active d'électrode le mélange selon la revendication 10.

12. Électrode selon la revendication 11 qui comprend en outre un liant, et/ou un épaississant et/ou un surfactant et/ou un sel, éventuellement un ou des additif(s) conducteur(s) électronique(s), et un collecteur de courant.

13. Cellule d'un accumulateur rechargeable à électrolyte organique, non aqueux comprenant au moins une électrode selon la revendication 11 ou 12.

14. Accumulateur ou batterie comprenant une ou plusieurs cellule(s) selon la revendication 13 ; de préférence, ledit accumulateur ou ladite batterie est une batterie au lithium, par exemple une batterie Li-ion.

15. Accumulateur selon la revendication 14 qui est une pile bouton.

## Patentansprüche

1. Verfahren zur Herstellung einer Mischung aus einem Pulver aus einer aktiven Elektrodenverbindung und einem Pulver aus einer elektronisch leitfähigen Verbindung, bei dem man die folgenden Schritte ausführt:
- man bereitet ein flüssiges Medium vor, welches das Pulver der aktiven Elektrodenverbindung und das Pulver der elektronisch leitfähigen Verbindung enthält;
- man unterzieht das das Pulver der aktiven Elektrodenverbindung und das Pulver der elektronisch leitfähigen Verbindung enthaltende flüssige Medium der Einwirkung von Hoch-energie-Ultraschallwellen, erzeugt indem man die Sonde einer Ultraschallquelle (sonificateur) von hoher-Intensität und hoher Energie in dem flüssigen Medium platziert, wobei die durch die Ultraschallwellen erzeugte Energiedichte 50 bis 1000 W/L, bevorzugt 150 bis 700 W/L und noch bevorzugter 300 bis 500 W/L des flüssigen Mediums beträgt;
- man eliminiert das flüssige Medium ;
- man erhält die Mischung aus dem Pulver der aktiven Elektrodenverbindung und dem Pulver der elektronisch leitfähigen Verbindung.

2. Verfahren nach Anspruch 1, bei dem die Einwirkung der Ultraschallwellen so reguliert wird, dass sie ermöglichen, eine Temperatur des flüssigen Mediums aufrechtzuerhalten, die niedriger als die Siedetemperatur des genannten flüssigen Mediums und vorzugweise stabil ist.

3. Verfahren nach einem der vorhergehenden Ansprüche, bei dem das flüssige Medium einer intermittierenden Einwirkung der Ultraschallwellen unterzogen wird, wobei das flüssige Medium vorzugsweise der Einwirkung der Ultraschallwellen während Perioden von 1 bis 10 Sekunden unterzogen wird und dabei zwischen zwei Perioden Pausen mit einer Dauer von 1 bis 10 Sekunden vorgesehen sind.

4. Verfahren nach einem der vorhergehenden Ansprüche, bei dem das flüssige Medium einer Einwirkung der Ultraschallwellen während einer Gesamtdauer von 1 Minute bis 40 Stunden, vorzugsweise 30 Minuten bis 30 Stunden, unterzogen wird.

5. Verfahren nach einem der vorhergehenden Ansprüche, bei dem das flüssige Medium ausgewählt wird unter Wasser ; den wässrigen Lösungen ; den organischen Lösungsmittel, zum Beispiel Ethanol, NMP (N-Methylpyrrolidon), Hexan, Azeton ; und den Mischungen aus diesen.

6. Verfahren nach einem der vorhergehenden Ansprüche, bei dem die Mischung des Pulvers der aktiven Elektrodenverbindung und des Pulvers des elektronischen Leiters in dem flüssigen Medium nicht löslich ist.

7. Verfahren nach einem der vorhergehenden Ansprüche, bei dem die aktive Elektrodenverbindung ausgewählt wird unter den aktiven Positivelektrodenverbindungen und den aktiven Negativelektrodenverbindungen der Li-Ion-Batterien, und den aktiven Positivelektrodenverbindungen der Lithium-Metall-Batterien ; vorzugsweise wird dabei die aktive Elektrodenverbindung ausgewählt unter den Titanoxiden wie etwa TiO₂ in Form von Bronze oder Anatas, Li₄Ti₅O₁₂ ; den Verbindungen mit polyanionischem Gerüst wie etwa LiFePO₄, LiMnPO₄ und Li₃V₂ (PO₄)₃ ; den lamellaren Oxiden wie etwa LiCoO₂, und LiNi_{0,8}Co_{0,15}Al_{0,05} O₂ ; den Spinelloxiden wie etwa LiMn₂O₄, und LiNi_{0.5} Mn_{1,5}O₄ ; dem Silizium ; dem Schwefel ; dem Kohlenstoff ; dem Graphitkohlenstoff ; und ihren Mischungen.

8. Verfahren nach einem der vorhergehenden Ansprüche, bei dem die elektronisch leitfähige Verbindung ausgewählt wird unter den metallischen Partikeln wie etwa den Partikeln von Ag, von Cu, von Ni ; dem Kohlenstoff, zum Beispiel in Form von Graphit, von Ruß, von Kohlenstofffasern, von Kohlenstoff-Nanofäden, von Kohlenstoff-Nanoröhren, von Kohlenstoff-Nanokugeln ; den elektronisch leitfähigen Polymeren ; und ihren Mischungen ; vorzugsweise ist dabei die elektronisch leitfähige Verbindung ein Kohlenstoff oder eine Mischung von Kohlenstoffen, ausgewählt unter den amorphen oder kristallisierten Kohlenstoffen in der Form von Fasern, Nanoröhren, Nanofäden oder Nanokugeln.

9. Verfahren nach einem der vorhergehenden Ansprüche, bei dem die elektronisch leitfähige Verbindung wie etwa der Kohlenstoff 2 bis 60 % der Masse der Mischung repräsentiert.

10. Mischung aus einem Pulver einer aktiven Elektrodenverbindung und aus einem elektronisch leitfähigen Pulver, herstellbar gemäß dem Verfahren nach einem der Ansprüche 1 bis 9.

11. Elektrode, als elektrochemisch aktives Elektrodenmaterial die Mischung nach Anspruch 10 umfassend.

12. Elektrode nach Anspruch 11, die außerdem ein Bindemittel und/oder ein Dickungsmittel und/oder einen oberflächenaktiven Stoff und/oder ein Salz, eventuell ein oder mehreren, elektronisch leitfähiges(en) Additiv(e), und einen Stromsammler umfasst.

13. Zelle eines wenigstens eine Elektrode nach einem der Ansprüche 11 oder 12 umfassenden, wasserfreies organisches Elektrolyt enthaltenden wiederaufladbaren Akkumulators.

14. Akkumulator oder Batterie mit einer (oder mehreren) Zelle(n) nach Anspruch 13 ; wobei der genannte Akkumulator oder die genannte Batterie eine Lithium-Batterie, zum Beispiel eine Li-Ion-Batterie, ist.

15. Akkumulator nach Anspruch 14, der eine Knopfzelle ist.

## Claims

1. A method for preparing a mixture of a powder of an electrode active compound and of a powder of an electron conducting compound, in which the following successive steps are performed:
- a liquid medium is prepared, containing the powder of the electrode active compound and the powder of the electron conducting compound;
- the liquid medium containing the powder of the electrode active compound and the powder of the electron conducting compound is subjected to the action of high energy ultrasonic waves produced by placing the probe of a high intensity, high energy, sonicator in the liquid medium, wherein the energy density produced by the ultrasonic waves is from 50 to 1000 W/L, preferably from 150 to 700 W/L, and still preferably from 300 to 500 W/L of the liquid medium;
- the liquid medium is removed;
- the mixture of the powder of the electrode active compound and of the powder of the electron conducting compound is collected.

2. The method according to claim 1 wherein the action of the ultrasonic waves is controlled so that it allows a temperature of the liquid medium to be maintained below the boiling temperature of said liquid medium, and preferably a stable temperature.

3. The method according to any one of the preceding claims, wherein the liquid medium is subjected to the action of ultrasonic waves intermittently; preferably the liquid medium is subjected to the action of ultrasonic waves for periods from 1 to 10 seconds while observing pauses with a duration from 1 to 10 seconds between two periods.

4. The method according to any one of the preceding claims wherein the liquid medium is subjected to the action of ultrasonic waves for a total duration from 1 minute to 40 hours, preferably from 30 minutes to 30 hours.

5. The method according to any one of the preceding claims wherein the liquid medium is selected from water; aqueous solutions; organic solvents, for example ethanol, NMP (N-methyl-pyrrolidone), hexane, acetone; and mixtures thereof.

6. The method according to any one of the preceding claims wherein the mixture of the powder of the electrode active compound and of the powder of the electron conductor is insoluble in the liquid medium.

7. The method according to any one of the preceding claims wherein the electrode active compound is selected from the positive electrode active compounds and the negative electrode active compounds of Li-ion batteries, and the positive electrode active compounds of metal lithium batteries; preferably, the electrode active compound is selected from titanium oxides such as TiO₂ in the bronze or anatase form, Li₄Ti₅O₁₂; compounds with a polyanion backbone such as LiFePO₄, LiMnPO₄, and Li₃V₂ (PO₄)₃; lamellar oxides such as LiCoO2, and LiNi_{0.8}Co_{0.15}Al_{0.05}O₂; spinel oxides such as LiMn₂O₄, and LiNi_{0.5}Mn_{1.5}O₄; silicon; sulfur; carbon; graphite carbon; and mixtures thereof.

8. The method according to any one of the preceding claims wherein the electron conducting compound is selected from metal particles such as Ag, Cu, Ni particles; from carbon, for example in the form of graphite, carbon black, carbon fibers, carbon nanowires, carbon nanotubes, carbon nanospheres; electron conducting polymers; and mixtures thereof; preferably, the electron conducting compound is a carbon or a mixture of carbons selected from amorphous or crystallized carbons, in the form of fibers, nanotubes, nanowires or nanospheres.

9. The method according to any one of the preceding claims wherein the electron conducting compound, such as carbon, accounts for 2 to 60% by mass of the mixture.

10. A mixture of a powder of an electrode active compound and of a powder of an electron conducting compound which may be prepared by the method according to any one of claims 1 to 9.

11. An electrode comprising as an electrode electrochemically active material, the mixture according to claim 10.

12. The electrode according to claim 11 which further comprises a binder and/or a thickener and/or a surfactant and/or a salt, optionally one or more electron conducting additive(s), and a current collector.

13. A cell of a rechargeable accumulator with a non-aqueous organic electrolyte comprising at least one electrode according to claim 11 or 12.

14. An accumulator or battery comprising one or more cells according to claim 13; preferably, said accumulator or battery is a lithium battery, for example a Li-ion battery.

15. The accumulator according to claim 14 which is a button cell.
